Europäisches Patentamt

(19) European Patent Office

Office européen des brevets

(11) Publication number: **0 083 585**

**B1**

(12) **EUROPEAN PATENT SPECIFICATION**

(45) Date of publication of patent specification: **04.09.85**

(21) Application number: **82900406.8**

(22) Date of filing: **05.02.82**

(86) International application number:
**PCT/SE82/00031**

(87) International publication number:
**WO 82/02652 19.08.82 Gazette 82/20**

(51) Int. Cl.⁴: **A 23 L 1/212,** A 23 L 1/216, A 23 B 7/04

(54) **PROCESS FOR PREPARING A DEEP-FROZEN, CONCENTRATED MASH.**

(30) Priority: **09.02.81 SE 8100887**

(43) Date of publication of application:
**20.07.83 Bulletin 83/29**

(45) Publication of the grant of the patent:
**04.09.85 Bulletin 85/36**

(84) Designated Contracting States:
**AT BE CH DE FR GB LI LU NL SE**

(56) References cited:
**GB-A-1 384 469**
**SE-B- 364 626**
**US-A-3 368 363**

**Derwent's abstract No 77 462 D/42**

(73) Proprietor: **FOOD PROCESSERS SERVICE AB**
**Haväng**
**S-270 57 Kivik (SE)**

(72) Inventor: **HOLMQVIST, Sixten**
**Haväng**
**S-27087 Kivik (SE)**

(74) Representative: **Asketorp, Göran P. et al**
**Lars Holmqvist Patentbyra AB Box 4289**
**S-203 14 Malmö 4 (SE)**

Courier Press, Leamington Spa, England.

## Description

### Technical field

The present invention relates to a process for preparing a deep-frozen, concentrated mash and especially a process for preparing a deep-frozen potato mash.

In accordance with the invention even mash of other agriculture products may be used, such as turnips, but potatoes are preferably used and therefore potato is referred to hereinafter.

### Prior art

Present industrially prepared potato mash products are mainly dried products, the drying being carried out with a roller dryer, fluid bed dryer or with any other appropriate commercially available drying equipment. Dried potato mash products are for example potato flakes and potato mash powder.

Moreover, deep-frozen potato mash in its normal non-concentrated form is available.

Methods of preparing the different potato mash products are well known within the art. The potato flake is perhaps the first product of its kind to be commercially used and generally accepted. When preparing the potato flake the potato is washed, peeled for example with a caustic solution, mechanical peeling or steam peeling or combinations thereof, sliced and boiled. The boiling is often carried out in a two-stage process, where the first step usually comprises boiling in water in order to leach substances, such as sugars, undesirable in the further process. After this first cooking step the potato is cooled with water or in any other appropriate way and thereafter boiled a second and final time, which is often performed with direct steam. The so obtained cooked potato is mashed by means of any type of mechanical device, whereafter the wet potato mash by means of roll coaters, is transmitted to a roller dryer. The roller dryer is usually a cylindrical roller dryer which is directly heated with steam and which is working under atmospheric pressure. The potato mash is dried to a water content of approximately 7 to 8 percent after which the dried potato mash film is scraped off the roller with a cutter device and the dried sheet of potato mash is desintegrated.

The potato mash powder is prepared in a substantial different way. The process steps until the mashing are mainly the same as when preparing the potato mash flakes but after this step the methods differ substantially. In the preparation of the potato mash powder the mashed potato is transferred to a mixer. It is also transferred a certain amount of dried potato mash powder to this mixer. This is the so called "add-back"-method. The mixing is carried out to give a mixture as homogenous as possible and the final mixture is thereafter transmitted to a broad conveyor belt or to any other appropriate equipment where the mixture is given a certain holding time. This holding time is intended to equalize the moisture between the dried potato powder particles and the wet mash. The so obtained wet mixture has generally a dry content of between approximately 30 and 38 percent. The originally wet potato mash has a dry content, depending on the initial dry content of the potato, of around 23—25 percent. The wet mixture now moisture equalized is then dried in a series of drying stages. This drying method has been developed in order to protect the potato cell walls. The lower the water content of a potato mash cell the more fragile and easily destroyable the cell walls are. Mechanical action at a water content under 20 percent is enough to destroy the cell walls, even when gentle. Destroyed cell walls results in the release of free starch, which means that when restoring the powder to potato mash, the resulting end product is gluey and gum like and not at all a potato mash product with its normal characteristic consistency.

The "add-back"-method and the process with several drying stages have been developed mainly in order to give the potato a gentle treatment and thus avoid an end product being gluey and gum like as indicated above. The first drying stage is normally carried out at a relatively high temperature in for example a fluid bed dryer and the drying in this step is usually carried out until not less than approximately 20 percent of the water content in the powder remains. Thereafter, the powder is separated from the air stream in a cyclon device or any other similar apparatus. The continued drying to the finally desired water content of approximately 7 to 8 percent is usually carried out in several stages in order to protect the fragile cell walls. Drying stages nr 2 and 3 are normally carried out in a fluid bed dryer of conventional construction, where drying stage No. 2 usually is carried out at relatively high temperature down to a water content of approximately 14—15 percent and the last drying stage, No. 3, is usually carried out with air of low temperature. Cooled demoistured air is often used.

The "add-back"-method comprises a continued recirculation of a large amount of already dried powder to the process which means that the thermal and chemical stress on the product are substantial. In order to protect the product mainly from oxidation, it has thus been necessary to use different kinds of additives in order to receive a final product which is acceptable from the consumer's viewpoint and which will have reasonable protection during its shelf life which normally is estimated to be around one year. The additives are usually more than one and above all sulphur dioxide in fairly high amounts of between 25 and 150 ppm on the basis of the final product is used. Moreover, different phosphates are often added in order to protect the product against discoloration and reactions with Fe released during the process or existent in the potato. A combination of antioxidants is often added, for example BHA, tokoferol or different gallates and these are often added together with citric acid or ascorbic acid in order to obtain a synergistic effect.

The deep-frozen potato mash commercially available today is usually ordinary potato mash that has been frozen in one or another form, for example into blocks or into smaller pieces such as pellets.

There are many drawbacks with existent potato mash products. The potato flake is dried in one step down to the final water content of between 7 and 8 percent and this severe drying puts a great strain on the potato cell walls, which results in a gluey final potato mash. Moreover, in order to give the flakes a good shelf life the same type of additives, as mentioned above is required with regard to the potato mash powder. This rather ungently treated mash gives a product which from the consumer's viewpoint is usually considered to be non-acceptable as well with regard to consistency as taste.

When preparing the potato mash powder the potato mash cells are subjected to a considerbaly more gentle treatment than when preparing the potato mash flake. Due to the "add-back"-method and the rather slow drying in several stages most of the cell walls are remained intact and a gluey and gum like final product is avoided. However, as mentioned above, the thermal and chemical strains on the potato mash powder are substantial due to the extensive recirculation of dried powder.

With regard to heat economy the process for preparing potato flakes is far more favourable than the process to prepare the potato mash powder. The "add-back"-method implies an unsatisfying heat economy as a great amount of already dried powder is continuously recirculated to the process.

With regard to application it is known that the potato flake does not always correspond to what the consumer wishes. For example when serving in large scale households a certain time of warm keeping is required which in general means fragile cell walls due to drying giving the potato flake an unwanted consistency and often discolorations. Due to the earlier rather rough treatment it is often required with regard to the potato flake that the water added has a temperature below the boiling point; often between 75 and 80° in order to obtain the final potato mash. If boiling water is added to the potato flake the final product will often be much more gluey. With regard to application the potato mash powder is much better and may be mechanically restored through beating. There is no requirements as in the case of the flake on that the temperature of the added water must be below the boiling point. The gentle treatment when preparing the potato mash powder gives cell walls that are mainly intact and thus a product not as susceptible as the potato flake. Beating the potato mash powder does normally not affect the consistancy and the powder gives a light and fluffy final potato mash.

The deep-frozen potato mash has shown to be a product which is very difficult to handle especially when heating. There is a great risk that the potato mash will get burned when heated and the heating is moreover time-consuming and troublesome. This product is also very uneconomical due to the fact that all the water that normally is comprised in the potato mash remains during all stages, which gives a very bulky product requiring substantial storage space and packing as well as substantial freezing storage and transport costs.

Summing up it may be stated that even if the potato flake with regard to energy is rather favourable it is not fully accepted by the consumer, mainly due to the consistency but even due to differencies in taste and appearance in comparison with home made potato mash. Not either the frozen potato mash have been successful while heating the mash implies great difficulties to the consumer. The potato mash powder is the product that has been most accepted. However there are drawbacks especially with regard to taste due to the very extensive recirculation of the powder which i.a. means that thermally sensitive flavours are destroyed. In all processes which comprise extensive drying, i.e. both when preparing the potato flake and the potato mash powder, a great amount of flavours and vitamins are destroyed. Vitamin C is especially sensitive to heat and while the potato is a substantial source of vitamin C these dried products are unsatisfactory.

However, the dominating drawback with as well the potato flake as the potato mash powder is the amount of additives required to carry out the manufacture. An increasing consciousness of the negative effects from additives, as for example allergies, results in a general resistence to buy products including additives.

An object with the present invention is to provide a process for preparing a potato mash, which is fully acceptable to the consumer as well with regard to consistency, taste and appearance and to which potato mash no additives have been added, while maintaining flavours and vitamins.

Another object with the present invention is to provide a process for preparing a potato mash with a good storage stability.

Yet another object with the present invention is to provide a process for providing a potato mash, which process is favourable with regard to heat economy.

Disclosure of the invention and the best mode of carrying out the invention

The present invention provides a process for preparing a deep-frozen concentrated potato mash comprising the following steps:

A. Washing the potato in any conventional way.

B. Peeling the potato by means of any ordinary commercially available method, such as steam-peeling, caustic-peeling, mechanical peeling or a combination thereof.

C. Cutting the potato into desired pieces, preferably in slices with a thickness of between 15 and 20 mm, but the potato may also be divided into cubes, irregular pieces etc.

D. Pre-boiling the potato in a pre-boiler, such as a helicoidal boiler with water, directly or indirectly heated. The pre-boiling is preferably performed at a temperature of 90—98°C for an appropriate number of minutes, preferably between 5 and 15 minutes, all dependent on the quality of the potato.

E. Cooling the potato preferably in a cooling device with counter-current cooling in running water. Other forms of cooling may be used but the above mentioned seems to be the most economically favourable at the moment. Cooling is preferably continued until a temperature of around 20°C is reached.

F. Boiling the potato at a temperature of 100°C preferably with steam which gives the most economic yield. The boiling may also be carried out with water under atmospheric pressure or with a positive pressure, The potato is boiled until a very slight decomposition of the potato pieces is obtained but before they are completely falling to pieces. The time for this final heat treatment is all dependent on the quality of the potato. Under-boiled potato results in a lumpy product and gives a poor yield.

G. Mashing the cooked potato in any appropriate mashing device, such as a straining machine, a mixer with an agitator, a granulating apparatus or the like. However, it is important that it is an apparatus in which the potato is subjected to a gentle treatment in order to avoid unnecessary destruction of the potato cells.

H. Partly drying the mashed potato to give a concentrated partly dried potato mash, preferably by transferring the mashed potato to a roller dryer working under atmospheric pressure. In order to avoid unnecessary strain on the cell walls the potato mash is removed from the drying rolls in the form of a wet film and transferred to a mixer with the help of a transport device. Preferably the roller drying is stopped when the potato mash film has a water content of approximately 20 percent while still possible to be drawn off the roller as a continuous film. The drying may also be carried out by means of any other appropriate device such as a vacuum roller dryer, a vacuum belt dryer or a microwave dryer. However, the most economical method is roller drying as described above.

I. Transferring the wet film or partly dried mash to a mixer, such as an agitator where a stream of not dried potato mash and wet potato film from the roller dryer are mixed in order to given an appropriate dry content, preferably around 55 to 70 percent. The amount of dry content is dependent of the quality desired for the final product. The mixture is carried out so that the potato is given the most gentle treatment possible.

J. Granulating the mixture in any type of granulating apparatus, preferably one comprising a perforated drum with a counter pressure roller or a flat perforated disc with a counter pressure roller in which the diameter of the holes is chosen so that the desired particle size is obtained.

K. Freezing the potato granulates preferably as rapid as possible even if other slow freezing methods are possible without that the product quality will be impaired by this. The granulate is preferably poured directly into a fluid bed dryer, such as a flow freeze.

The so prepared freezed granulated concentrated potato mash product will be restored by measuring a desired amount of freezed granulate and pouring it down into boiling milk or water whereafter the mixture is heated and beated to the desired consistency.

Alternatively it is possible to use any of the previously known products such as conventionally manufactured dried potato mash powder or conventionally manufactured dried potato mash flakes at the above described mixing instead of wet decomposed potato film, but in order to avoid unnecessary breaking of the cells during the mixture the water content of this material ought to be increased from 7 to 8 percent in dried condition to approximately 20 percent.

The present invention provides a frozen concentrated potato mash which has a long storage stability without the addition of preservatives and which rapidly and easily may be prepared to give a potato mash which is as good as a home made as well with the regard to taste and consistency as appearance. As the mash is concentrated it requires rather small storage areas.

Thus, the present invention provides a potato mash which does not need any additive in the form of sulphur dioxide, phosphate, antioxidants or the like. The storage stability in freezed condition is appreciated to about one year and the final potato mash shows all the qualities characteristic to a so called home made potato mash. Through the gentle drying the potato mash cells are kept intact thus avoiding a gluey and gum like mash and at the same time maintaining the main part of the flavours and vitamins. The product is only dried to a water content of approximately 20 percent why a good heating economy is obtained knowing that the costs per amount of water removed are increasing substantially with decreasing water content.

While the potato is only subjected to partly drying, i.e. down to approximately 20 percent, most of the potato mash cells are kept intact and withstand the later mechanical mixing, which gives a final product that is neither gluey nor gum like but light and fluffy just like corresponding home made products.

Due to the fact that the mixture is granulated a product of appropriate form and convenient for freezing is obtained.

Below is given some non-limiting examples illustrating the invention and showing its advantages compared with previous art.

## Example 1

### 1. Washing
The potato is washed from earth and other kind of dirt.

### 2. Peeling
The potato is peeled, either mechanically with so called abrasive peeling, caustic peeling or steam peeling.

### 3. Slicing
The potato is sliced into slices with a thickness of approximately 15 mm.

### 4. Water boiling
The potato slices are boiled preferably in a continuous water boiler around 5 to 10 minutes, depending on the potato grade and quality. Water temperature around 90 to 100°C.

### 5. Cooling
The potato slices are cooled in a continuous water cooler to a temperature of around 20°C or below if admitted by the cooling water temperature.

### 6. Steam boiling
The potato slices are boiled in a continuous steam boiler until they are completely cooked. The steam should be streaming. The boiler should be of the type which avoids mechanical strain on the slices during boiling.

The boiling should give a slight decomposition of the slices without the slices being boiled to parts—firm parts may not be present.

### 7. Mashing
It is important that the mashing is performed without lumping. Mechanically the mashing machine should be shaped so that unnecessary destruction of the potato cells is avoided. A suitable machine is for example a double shaft mixer with an agitator and a screw feeder.

### 8. Drying and mixing
For the preparation of 2000 kg of concentrated deep-frozen potato mash per hour it is required according to the present method that part of the fresh mash is concentrated through drying. This means that the mash from the mashing machine is transferred to two transport devices, screw or belt conveyors. The first conveyor is leading the mash to a roller dryer, the second conveyor to a continuous mixer.

### Drying
The mash is transferred by means·of feed rollers of a drying cylinder to a roller dryer working under atmospheric pressure. To avoid destruction of the cell walls the drying is carried out so that the dried potato mash is scraped off the roller before it has reached the ordinary dry content of approximately 5 to 7 percent. A water content of between 15 and 20 percent is preferred.

It is then possible to take off the mash as a wet but continuous film from the roller.

The wet film is transported to the mixer where it is disintegrated and mixed with ordinary potato mash. In this case 1400 kg of potato mash and 600 kg of wet mash film is added to the mixer.

The mixing should be carried out as gentle as possible in order to protect the potato cell walls. A suitable mixer is a double shafted mixer with a screw feeder or a feed agitator. The mixer should be driven at a low number of revolutions, approximately 20 rpm.

### 9. Granulating
In order to have a free flowing product after freezing that can be easily restored and heated before serving it is substantial that the concentrated potato mash product is transformed into a coarse granulate or an agglomerate. This is preferably achieved by means of a machine which, as gentle as possible, is pressing the damp mass through any form of swage block.

In this example we have chosen a slow worm conveyor arranged in a completely surrounding chain at the front provided with a grating of stainless net. The sizes of the holes in the example are 4×4 mm. Suitable sizes are between 2×2 mm to 6×6 mm.

Other devices to be used are for example a machine with a horizontal round swage block of perforated stainless steel or net with a feed disc or rotating squeezing rolls, which gently press the humid mass through the swage block.

No cutting of the granulate is required if the humidity of the mass and the squeezing pressure is correctly balanced.

### 10. Freezing
Preferably, but not necessarily, freezing is carried out as rapid as possible. In the example the granulated humid mass will fall directly down into the air stream of a fluid bed dryer of the Flow-Freeze type. The temperature should be approximately −30 to −35°C. the frozen granulate is packed immediately without intermediate storage in the package intended for sale, in order to have a product as free flowing as possible.

## Example 2

### 1. Washing
The potato is washed from earth and other kind of dirt.

### 2. Peeling
The potato is peeled, either mechanically with so called abrasive peeling, caustic peeling or steam peeling.

### 3. Slicing
The potato is sliced into slices with a thickness of approximately 8—20 mm.

### 4. Water boiling
The potato slices are boiled in a continuous water boiler. Water temperature: 99—100°C. Boiling time from approximately 10 minutes to approximately 20 minutes, dependent of the thickness of the slices, potato grade and quality. The boiling should be carried out in such a way that it is completed. The potato should be easily mashed but should not be too much or too little cooked.

5. Cooling

This is carried out on a net belt conveyor or similar device. The cooling is carried out through blowing air. The temperature of the potato should not exceed 80°C after cooling.

6. Same as in example 1.

7. Same as in example 1.

8. Same as in example 1.

9. Same as in example 1.

10. Freezing

This step is carried out as in example 1 but can also be carried out with a tunnel freezer. In this case the granulate is put in a layer preferably of 10 mm thickness on the freeze bottom—provided with a net.

The air temperature should be around −30 to −35°C. The air speed should be such that a short freezing time is obtained. Preferably between 5 and 10 minutes. In order to have a product as free flowing as possible the mash is decomposed after freezing.

This should be carried out gently. An appropriate device is for example a finger breaker. This apparatus comprises two rollers with fingerlike tabs arranged on the surface area and rotating towards each other.

These tabs are shaped so that the frozen granulate will have a size of approximately 2 to 6 mm/side.

The freezing may also be carried out with a continuous belt freezer. This should be adapted to give a rapid freezing. The belt should preferably be perforated and the air stream should reach all parts of the mash granulate at the same time. The temperature is preferably around −30 to −35°C and the freezing time between 5 and 10 minutes.

The frozen concentrated mash should result in a granulate. If lumps are present they should be crushed in a finger breaker or other similar gentle devices. The product is immediately packed in the package ready for selling.

Second best mode of carrying out the invention
Example 3
Steps 1—7 are the same as in example 1

8. Drying and mixing

A somewhat poorer quality than that of examples 1 and 2 may be obtained in accordance with the following example. The difference in quality is that the texture is somewhat poorer than in the product manufactured in accordance with example 1.

The reason for preparing a potato mash product in accordance with this example is the possibility to use commercially available flakes. This is mostly an economical problem. Flakes do often appear in excess to a lower price. The texture of the flakes should be of a quality as good as possible. Ordinary flakes normally have a water content of around 6 to 10 percent. Such a flake is very sensible to mechanical treatment in dry condition.

Thus, it is preferable to raise the water content to around 16 to 22 percent. In the example the flakes are fed to a belt conveyor into an even layer, around 10 mm thick. Over the belt there is a shower which sprays the water over the whole area of flakes.

Dosages: 504 kg flakes with a water content of 7 percent
96 l of water per hour.

The humid flakes were transferred to a stack—the flakes were maintained in this stack for around 15 to 20 minutes in order to reach a moisture as homogenous as possible.

The flakes were then fed by means of a screw conveyor arranged in the bottom of the storage bunker.

The humid flakes, 600 kg per hour, were transferred to a double shaft mixer with feeding paddles on the shafts. 1400 kg of potato mash per hour was added simultaneously. The number of revolutions of the mixer was around 20 rpm.

9. Granulating as in example 1.

10. Freezing as in example 1.

**Claims**

1. A process for preparing a mash from roots, in which these roots are:
a) washed
b) peeled
c) divided into pieces of suitable form and size
d) pre-boiled in an appropriate pre-boiler
e) cooled, preferably through counter current cooling with flowing water
f) finally cooked, preferably with steam, for an appropriate number of minutes depending on the quality of the roots
g) mashed in an appropriate mashing device, characterized in that
h) the mash is transferred to a dryer device to partly dry the mash to give a concentrated, partly dried product, that
i) said partly dried product is transferred to a mixer and mixed with non-dried mash; that
j) said mixture is granulated in a granulating machine; and that
k) the granulate is frozen.
2. A process in accordance with claim 1, characterized in that the root is potato.

3. A process in accordance with claim 1 or 2, characterized in that the partly drying is carried out until a water content of approximately 20 percent is reached.

4. A process in accordance with claim 3, characterized in that the drying device is a roller dryer working under atmospheric pressure.

5. A process in accordance with claim 3, characterized in that the drying device is a vacuum roller dryer, vacuum belt dryer or microwave dryer.

6. A process in accordance with claim 1 or 2, characterized in that the mixing is carried out so that the final mixture has a dry content of between 55 and 70 percent.

7. A process in accordance with claim 2, modified in that steps h) and i) in claim 1 are replaced by admixing conventionally prepared dried potato mash flakes.

8. A process in accordance with claim 2, modified in that steps h) and i) in claim 1 are replaced by admixing conventionally prepared dried potato mash powder.

9. Products prepared by the process claimed in any one of claims 1 to 8.

## Patentansprüche

1. Verfahren zur Herstellung von Püree aus Hackfrüchten, wobei die Hackfrüchte
   a) gewaschenk
   b) geschält,
   c) in Stücke geeigneter Form und Grösse zerteilt,
   d) in zweckmässigem Kocher abgewällt,
   e) vorzugsweise durch Gegenströmung von fliessendem Wasser abgekühlt,
   f) eine je nach der Qualität der Hackfrüchte geeignete Anzahl Minuten vorzugsweise mit Dampf gar gekocht,
   g) in einer zweckmässigen Vorrichtung zerquetscht werden, dadurch gekennzeichnet,
   h) dass das Püree in eine Trockenvorrichtung überführt wird zum teilweisen Trocknen des Pürees, was ein zum Teil getrocknetes Produkt ergibt,
   i) dass das fragliche zum Teil getrocknetes Produkt in einem Mischer überführt und mit nicht-getrocknetem Püree gemischt wird,
   j) dass die fragliche Mischung in einer Granulationsvorrichtung granuliert wird, und
   k) dass das Granulat eingefroren wird.

2. Verfahren gemäss Anspruch 1, dadurch gekennzeichnet, dass die Hackfrucht aus Kartoffel besteht.

3. Verfahren gemäss Ansprüche 1 oder 2, dadurch gekennzeichnet, dass das teilweise Trocknen erfolgt, bis ein Wassergehalt von etwa 20% erzielt ist.

4. Verfahren gemäss Anspruch 3, dadurch gekennzeichnet, dass die Trockenvorrichtung aus einem unter atmosphärischem Druck arbeitenden Walzentrockner besteht.

5. Verfahren gemäss Anspruch 3, dadurch gekennzeichnet, dass die Trockenvorrichtung aus einem Saugwalzentrockner, Saugbandtrockner oder Mikrowellentrockner besteht.

6. Verfahren gemäss Ansprüche 1 oder 2, dadurch gekennzeichnet, dass das Mischen so erfolgt, dass die endgültige Mischung eine Trockensubstanz von 55 bis 70% aufweist.

7. Verfahren gemäss Anspruch 2, dadurch geändert, dass die Massnahmen unter h) und i) in Anspruch 1 durch das Zusetzen vom in gewöhnlicher Weise zubereiteten getrockneten Kartoffelpüreeflocken ersetzt werden.

8. Verfahren gemäss Anspruch 2, dadurch geändert, dass die Massnahmen unter h) und i) in Anspruch 1 durch das Zusetzen von in gewöhnlicher Weise zubereitetem getrocknetem Kartoffelpüreepulver ersetzt werden.

9. Produkte die durch die Verfahren gemäss irgendeinem der Ansprüche 1 bis 8 fertiggestellte worden sind.

## Revendications

1. Procédé pour la préparation d'une purée de racines, dans lequel ces racines sont:
   a) lavées
   b) pelées
   c) divisées en morceaux de forme et dimension appropriées
   d) pré-bouillies dans un pré-bouilleur approprié
   e) refroidies, de préférence par refroidissement à contre-courant avec de l'eau en circulation
   f) finalement cuites, de préférence à la vapeur, pendant un nombre de minutes approprié dépendant de la qualité des racines
   g) écrasées dans un dispositif d'écrasement approprié, caractérisé en ce que
   h) la purée est transférée dans un dispositif de séchage, pour sécher partiellement la purée de manière à obtenir un produit concentré, partiellement séché;
   i) ledit produit partiellement séché est transféré à un mélangeur et mélangé avec une purée non séchée;
   j) le mélange résultant est granulé dans une machine de granulation; et
   k) le granulé est congelé.

2. Procédé suivant la revendication 1, caractérisé en ce que les racines sont des pommes de terre.

3. Procédé suivant la revendication 1 ou 2, caractérisé en ce que le séchage partiel est effectué jusqu'à atteindre une teneur en eau de 20% environ.

4. Procédé suivant la revendication 3, caractérisé en ce que le dispositif de séchage est un sécheur à rouleau travaillant à la pression atmosphérique.

5. Procédé suivant la revendication 3, caractérisé en ce que le dispositif de séchage est un sécheur à rouleau sous vide, un sécheur à bande sous vide ou un sécheur à microondes.

6. Procédé suivant la revendication 1 ou 2, caractérisé en ce que le mélange selon l'opération (i) est effectué de façon que le mélange final ait une teneur en matières sèches comprise entre 55 et 70%.

7. Procédé suivant la revendication 2, modifié en ce que les opérations h) et i) de la revendication 1 sont remplacées par l'addition et le mélange de flocons de purée de pomme de terre séchée, préparés de façon connue.

8. Procédé suivant la revendication 2, modifié en ce que les opérations h) et i) de la revendication 1 sont remplacées par l'addition et le mélange de poudre de purée de pomme de terre séchée, préparée de façon connue.

9. Produits préparés par le procédé suivant l'une quelconque des revendications 1 à 8.